# FASCICULE DE BREVET EUROPEEN

(11) **EP 2 345 475 B1**
(45) Date de publication et mention de la délivrance du brevet: **05.06.2013**
(21) Numéro de dépôt: 11150831.3
(22) Date de dépôt: 13.01.2011
(51) Int. Cl.: B01J 2/04

(54) **Procédé et installation de fabrication de particules solides à partir d'une composition liquide ou semi-liquide**
Verfahren und Einrichtung zur Erzeugung von festen Partiklen von einem flüssigen oder semi-flüssigen Zusammensetzung
Process and installation for the production of solid particles from a liquid or semi-liquid composition

(30) Priorité: 19.01.2010 FR 1050331
(43) Date de publication de la demande: 20.07.2011
(73) Titulaire: L'AIR LIQUIDE, Société Anonyme pour l'Etude et l'Exploitation des Procédés Georges Claude, 75007 Paris (FR)
(72) Inventeur: Taylor, Robert, 1300 Wavre (BE)
(74) Mandataire: Mellul-Bendelac, Sylvie Lisette

(56) Documents cités:
- EP-A1- 0 945 173
- WO-A1-02/094428
- US-A- 5 307 640
- US-A1- 2008 075 777

## Description

La présente invention concerne le domaine des procédés et installations de traitement cryogénique de produits, notamment alimentaires, pharmaceutiques ou encore cosmétiques, les procédés visés étant en particulier les procédés dits de « sphéronisation »» i.e. de fabrication de particules solides (on dit souvent « pellets » ou « prilling » dans ces industries), à partir d'une composition liquide ou semi-liquide, notamment dans des applications alimentaires (telles les particules de matières grasses, de crème glacée) ou de ferments, notamment lactiques, ou encore par exemple de billes entrant dans la fabrication de produits cosmétiques ou encore chimiques, détergents, cires, fertiliseurs etc.....

Les documents suivants illustrent la littérature très abondante et parfois ancienne, qui a été consacrée à cette question : EP-919 279, EP0393963, US-4 655 047, GB-2 092 880, WO99/33555, ou encore US-4 982 577.

On parlera indifféremment dans ce qui suit de « surgélation », de « cristallisation », ou de « solidification », totale ou partielle, de gouttes du produit, afin de former les particules recherchées, différentes terminologies dont l'homme du métier est familier selon la composition qui est traitée (plus ou moins aqueuse, plus ou moins riche en graisses....).

Les solutions existantes sont pour certaines insuffisantes pour produire des particules bien régulières et dans la gamme de diamètres très recherchée d'un mm et moins, ou au contraire sont très performantes mais bien trop coûteuses voire très complexes, ce qui rebute certains sites producteurs (par exemple 200000 à 300000 euros, ce qui est considéré comme exorbitant par certains producteurs).

On s'intéresse selon la présente invention aux particules dites « mono-dispersées », c'est-à-dire dont la taille est sensiblement la même, ne donnant pas lieu à la production d'agrégations, de particules doubles ou triples, ou encore de particules trop petites (« satellites »), particules trop petites qui sont un inconvénient majeur pour certaines applications, notamment pharmaceutiques, et dont l'élimination est donc un enjeu majeur.

Comme on l'a signalé plus haut, les méthodes existantes offrent soit des résultats satisfaisants mais avec des coûts d'investissement exorbitants, soit des résultats insuffisants (cahier des charges non atteint, débit trop faible etc...).

On peut citer l'exemple du procédé proposé par le document WO99/33555 où la composition et le cryogène sont injectés de façon co-courante par le haut d'une chambre tubulaire, le courant de produit étant entouré par deux courants d'azote liquide concentriques (le courant central de cryogène est entouré par le courant de produit, lui-même entouré par un courant de cryogène externe et qui lui est concentrique également).

Cette configuration représente une solution intéressante mais qui reste imparfaite : elle donne lieu à un transfert thermique insuffisant, qui nécessiterait soit d'allonger le tube, soit d'utiliser un fluide cryogénique plus froid, soit encore de procéder à un refroidissement complémentaire en aval. La répartition de tailles de particules obtenue est également trop dispersée. On peut penser que ces résultats sont liés aux conditions rencontrées par le courant de gouttes au démarrage du procédé, contact des gouttes avec les courants d'azote liquide en co-courant et dans des conditions fortement turbulentes.

Dans ce domaine des installations utilisant de très longues colonnes de réaction on peut aussi citer le cas du document WO02/094428qui met en oeuvre une colonne de 10 mètres et effectue un refroidissement au moins en partie par tombée des particules dans un bain cryogénique.

La présente invention s'attache alors à proposer une nouvelle solution de production de telles particules, qui soit simple, qui permette à la fois de répondre au cahier des charges technique posé tout en étant d'un coût modéré, voire même qui permette de s'adapter de façon simple et peu coûteuse à un matériel existant.

La présente invention concerne alors une installation de fabrication de particules solides, selon la revendication 3.

La présente invention concerne également un procédé de fabrication de particules solides, selon la revendication 1.

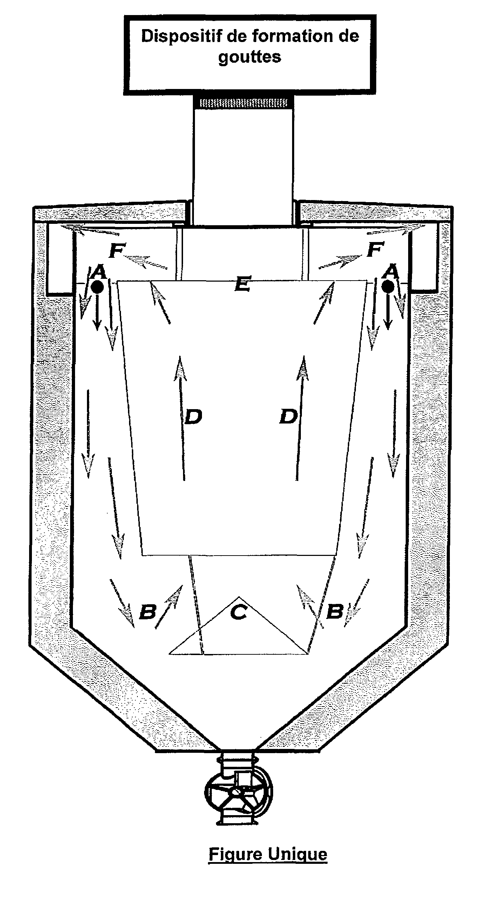

D'autres caractéristiques et avantages ressortiront de la description suivante, donnée uniquement à titre d'exemple et faite en référence à la figure unique annexée qui est une vue schématique partielle en coupe d'une installation permettant la mise en oeuvre de l'invention.

On dispose d'un système de production et dépose de gouttes (par exemple de taille voisine de 1 mm). On utilise ici un système commercialement disponible, il en existe de nombreux, par exemple les systèmes commercialisés par les sociétés GEA Niro ou Tuttle Prilling Systems.

Ce système injecte les gouttes formées dans le haut du dispositif, dans un tube de réaction, de forme conique sur une portion du tube pour le mode de réalisation représenté, mais d'autres formes peuvent être envisagées, et notamment la forme cylindrique ; cône au sein duquel le courant de gouttes rencontre un courant de gaz froid montant (à contre courant), confiné au sein du tube de réaction.

Plus précisément les gouttes formées et injectées dans la partie haute du dispositif tombent par gravité, à titre indicatif on peut considérer qu'elles démarrent à une vitesse voisine de 0.5m/sec puis accélèrent sous l'effet de la gravité pour atteindre environ 2m/s sur environ 0.5 m.

Elles rencontrent un courant de gaz froid montant, en régime qui n'est certes pas nécessairement laminaire mais qui en tout état de cause n'est pas totalement turbulent.

S'agissant des phases présentes, il est tout à fait clair que dans le haut du dispositif le fluide injecté arrive totalement gazeux, alors qu'au plus bas du tube, là où l'injection de fluide est réalisée, il est tout à fait possible que l'on soit en présence de diphasique gaz/liquide, même si cette présence de fines gouttelettes de cryogène est un phénomène que nous préférons éviter selon l'invention.

On peut penser que les gouttes de produit descendantes ont tendance à entraîner du gaz vers le bas, vu les dimensions respectives entre le courant de gouttes descendant et le diamètre moyen du tube conique de réaction (en E, en D).

On peut également légitimement avancer le fait que dans ces conditions, les mouvements latéraux des gouttes descendantes sont très limités, les gouttes ne s'entrechoquent pas entre elles.

En poursuivant leur descente dans le tube, le long de la zone D, les gouttes accélèrent leur descente sous l'effet de la gravité, tout en étant refroidies par le gaz froid montant.

Comme on l'aura compris, au fur et à mesure que leur descente se poursuit, les gouttes déjà pré-refroidies poursuivent leur refroidissement, et deviennent, de fait, encore moins sensibles aux mouvements latéraux, aux turbulences éventuelles, et ainsi dans la partie basse du dispositif, où le régime de gaz peut être plus turbulent, si les particules s'entrechoquent c'est sans conséquence fâcheuse puisqu'elles sont déjà largement croutées, voire solidifiées à coeur, elles n'auront alors aucune tendance à s'agréger en larges particules.

Sur le mode de réalisation représenté, on a fait figurer un moyen additionnel, optionnel, mais très avantageux, le cône C, qui est un moyen de déflection, et comme on l'aura compris, à l'extrémité du tube/cône de réaction, les gouttes sont suffisamment refroidies pour tolérer sans inconvénients l'impaction sur le cône C de déflection.

Ce cône C de déflection permet aux particules d'être décélérées, et délivrées à une issue de sortie, par exemple équipée d'une vanne rotative comme pour le mode ici représenté (d'autres moyens pourraient être envisagés comme une vis convoyeur ou autres...).

Ces moyens sont destinés également à limiter les pertes de gaz par la sortie produits.

Pour le mode de réalisation représenté, le cryogène, ici l'azote liquide, est injecté en plusieurs points, dans la partie haute, selon une distribution annulaire d'orifices autour du tube de réaction (sensiblement au niveau des points « A » mentionnés sur la figure).

Les arrivées de cryogène créent un phénomène d'entraînement (venturi) du gaz froid montant, prenant du gaz des zones F pour l'entraîner vers le bas, ce gaz montant entrainé étant suffisamment « chaud » pour participer à, et réaliser, la vaporisation du cryogène frais injecté, avant que celui-ci n'atteigne la zone B, avant de remonter à l'intérieur du tube de réaction et rencontrer un courant de gouttes descendant.

En d'autres termes, le système fonctionne en circuit fermé :
- le gaz circule sous l'effet d'un effet Venturi ;
- l'injection de cryogène « frais » est effectuée pour compenser les pertes thermiques de l'installation, et la masse thermique du produit traité ;
- le système est fermé, sous réserve de la sortie de gaz annulaire dans la partie haute du dispositif (flèches au dessus des points F), sorties s'effectuant du fait de surpressions.

Avantageusement, les ouvertures en A sont variables et contrôlables, pour permettre d'ajuster la quantité de gaz « chaud » remontant et ré-entraîné vers le bas, vers les zones B. On peut également mettre en oeuvre, autour des points d'injection annulaires, des déflecteurs, ajustables, permettant de contrôler le débit de gaz en ces points.

On mentionnera notamment un exemple d'applicabilité : celui où l'on doit manipuler des particules de plus grand diamètre, pouvant accepter davantage de mouvements latéraux sans inconvénients ni dégâts, et où ainsi on peut augmenter la recirculation de gaz « chaud » vers le bas, zones B.

Et comme on l'aura compris, la situation inverse (nécessité de manipuler des particules de très petite taille) est envisagée et traitée efficacement avec cette adjustabilité des orifices en A.

Comme on l'a vu, le système est par principe fermé, étanche à l'air, et pour des compositions initiales très sensibles à l'oxydation, il est ainsi possible de purger le système à l'aide d'un gaz inerte avant démarrage de la production, ou encore durant des pauses de production, pour abaisser la teneur résiduelle en oxygène dans l'installation.

Comme il apparaîtra clairement à l'homme du métier à la lecture de ce qui précède, c'est tout le mérite de la présente invention d'avoir créé des conditions où :
- le régime gazeux dans la partie haute du tube de réaction n'est pas fortement turbulent, ce qui aurait été très préjudiciable en poussant les unes contre les autres les gouttes produites par le dispositif de production de gouttes du produit, avant que ces gouttes ne soient suffisamment pré-refroidies pour avoir une surface extérieure suffisamment rigide (croutage) ;
- le régime gazeux mis en place réalise également un certain brassage, évitant des différences de température trop prononcées entre le centre et les extrémités extérieures du courant gazeux ;
- on l'a vu, on a réalisé selon un mode préféré une circulation du gaz où le cryogène est injecté en partie haute, descend vers les zones B (en étant vaporisé) pour remonter à l'intérieur du tube de réaction, avant d'être ré-entraîné vers le bas selon les flèches F et les orifices A par effet venturi etc.... le gaz rencontre ainsi en moyenne plusieurs fois (on peut penser couramment au moins cinq fois) le courant de gouttes descendant, avant d'être évacué vers l'extérieur par gestion de la surpression à l'intérieur du dispositif ;
- comme on l'aura compris également, la forme conique du tube de réaction illustré ici n'est qu'indicative d'une forme possible, certes très avantageuse. En effet, cette forme conique favorise le fait que la vitesse du gaz dans la partie haute (qui rencontre donc les gouttes à peine formées) est plus faible que dans la partie basse du tube de réaction, donnant ainsi lieu à moins de mouvements latéraux, moins de turbulences, à un endroit du dispositif où les gouttes sont encore fragiles, donc limitant les phénomènes d'agrégation de particules. Dans la partie basse du tube de réaction la vitesse du gaz peut être plus élevée, puisque à cet endroit là les particules ont atteint une vitesse élevée, elles sont déjà pré-refroidies voire refroidies (croûtées) et n'auront pas tendance à s'agglomérer comme on l'a déjà souligné plus haut.

Un tube de réaction parallèle, cylindrique, fonctionnerait selon la présente invention bien entendu, mais il faudrait ralentir le gaz dans la partie haute du dispositif, et donc pour le même temps de refroidissement allonger la longueur du tube.
- de même, la présence du cône de déflection C en aval est très avantageuse mais n'est qu'une option, il permet d'éviter que les particules refroidies n'atterrissent directement dans le système de sortie (quel qu'il soit), il permet d'alimenter ce système de sortie avec des particules ralenties, qui pourraient être encore relativement « molles », ce que, on l'a compris, le procédé selon l'invention évite par ailleurs par toutes les mesures prises en amont.

Le mode de réalisation illustré ici est, on l'a dit, un mode préféré selon l'invention, et l'on a bien décrit tous les avantages qui y sont attachés, mais il faut noter que d'autres modes d'injection sont envisageables, toujours permettant d'obtenir ce contre-courant de gaz et par exemple injecter le liquide cryogénique par le bas -et non le haut-du dispositif, par exemple au voisinage des zones B.

Un dispositif tel que celui représenté en figure annexée a permis d'obtenir les performances de production suivantes.

On disposait d'un tube de réaction de hauteur voisine de 1 mètre, la matière traitée était une graisse de palme. L'installation a permis la production de 200 kg/heure de particules de 0.8 mm de diamètre, parfaitement cristallisées.

## Revendications

1. Procédé de fabrication de particules solides, mis en ceuvre dans une installation de fabrication de particules solides, à partir d'une composition liquide ou semi-liquide, mettant en oeuvre un dispositif de formation et dépose de gouttes du produit, puis une étape de surgélation ou cristallisation totale ou partielle des gouttes ainsi formées, où l'on met en oeuvre les mesures suivantes :
- on produit à l'aide du dispositif de formation un courant de gouttes de la composition, entrant dans la partie haute d'un tube de réaction, tube de réaction situé concentriquement à l'intérieur de l'installation, et circulant au sein de ce tube de réaction de haut en bas ;
- on alimente l'installation en liquide cryogénique, pour créer un courant de gaz froid montant à contre-courant du bas du tube de réaction vers le haut du tube de réaction,
**caractérisé en ce que** l'on réalise la circulation de gaz suivante :
- on alimente l'installation en liquide cryogénique dans la partie haute de l'installation, permettant au liquide cryogénique de descendre, en se vaporisant, vers le bas de l'installation à l'extérieur du tube de réaction pour remonter à l'intérieur du tube de réaction,
- le gaz atteignant le haut du tube de réaction est ré-entraîné vers le bas de l'installation par l'arrivée de liquide cryogénique, par effet venturi, permettant ainsi que le gaz rencontre plusieurs fois le courant de gouttes descendant, avant d'être évacué vers l'extérieur par gestion de la surpression à l'intérieur de l'installation.

2. Procédé selon la revendication 1, **caractérisé en ce que** l'on procède, en aval du tube de réaction, à l'aide d'un moyen de déflection, à la déflecrion du courant de particules obtenues à la sortie du tube de réaction, entre la sortie du tube de réaction et des moyens de récupération, sortie et acheminement vers l'extérieur des particules fabriquées, afin d'alimenter ces moyens de récupération en des particules qui ont été ralenties par rapport à une situation où le moyen de déflection serait absent.

3. Installation de fabrication de particules solides, à partir d'une composition liquide ou semi-liquide, mettant en oeuvre un dispositif de formation et dépose de gouttes du produit, puis une étape de surgélation ou cristallisation totale ou partielle des gouttes ainsi formées, comprenant :
- un tube de réaction situé concentriquement à l'intérieur de l'installation, dans la partie haute duquel un courant de gouttes produites par ledit dispositif de formation entre et au sein duquel ce courant circule de haut en bas ;
- des moyens d'alimentation en liquide cryogénique, permettant d'obtenir un courant de gaz froid montant à contre-courant du bas du tube de réaction vers le haut du tube de réaction,
**caractérisée en ce que** les moyens d'alimentation en liquide cryogénique permettent d'obtenir la configuration suivante :
- on alimente l'installation en liquide cryogénique dans la partie haute de l'installation, permettant au liquide cryogénique de descendre, en se vaporisant, vers le bas de l'installation à l'extérieur du tube de réaction pour remonter à l'intérieur du tube de réaction,
- le gaz atteignant le haut du tube de réaction est ré-entraîné vers le bas de l'installation par l'arrivée de liquide cryogénique, par effet venturi, permettant ainsi que le gaz rencontre plusieurs fois le courant de gouttes descendant, avant d'être évacué vers l'extérieur par gestion de la surpression à l'intérieur de l'installation.

4. Installation selon la revendication 3, **caractérisée en ce que** le tube de réaction est de forme sensiblement conique.

5. Installation selon la revendication 3 ou 4, **caractérisée en ce qu'**elle comprend, en aval du tube de réaction, un moyen de déflection, préférentiellement de forme conique, apte à s'interposer entre la sortie du tube de réaction et des moyens de récupération, sortie et acheminement vers l'extérieur des particules fabriquées, permettant d'alimenter ces moyens de récupération en des particules qui ont été ralenties par rapport à une situation où le moyen de déflection serait absent.

6. Installation selon l'une des revendications 3 à 5, **caractérisée en ce que** les moyens d'alimentation en liquide cryogénique réalisent l'injection du liquide cryogénique dans la partie haute de l'installation, selon une distribution annulaire d'orifices autour du tube de réaction.

## Patentansprüche

1. Verfahren zur Herstellung fester Partikel, das in einer Anlage zur Herstellung fester Partikel eingesetzt wird, aus einer flüssigen oder halbflüssigen Zusammensetzung, bei dem eine Vorrichtung zur Ausbildung und Abscheidung von Tropfen des Produkts eingesetzt wird, dann ein Schritt zum Einfrieren oder zur vollständigen oder teilweisen Kristallisation der so gebildeten Tropfen, wobei die folgenden Maßnahmen eingesetzt werden:
- Produzieren, mithilfe der Vorrichtung zur Bildung, eines Strom aus Tropfen der Zusammensetzung, der in den Kopfteil eines Reaktionsrohres eintritt, wobei das Reaktionsrohr konzentrisch im Innern der Anlage angeordnet ist, und innerhalb dieses Reaktionsrohrs von oben nach unten zirkuliert;
- Versorgen der Anlage mit kryogener Flüssigkeit, um einen Strom aus kaltem Gas zu erzeugen, der im Gegenstrom vom Boden des Reaktionsrohrs zum Kopf des Reaktionsrohrs steigt,
**dadurch gekennzeichnet, dass** die folgende Gaszirkulation ausgeführt wird:
- Versorgen der Anlage mit kryogener Flüssigkeit im Kopfteil der Anlage, wodurch die kryogene Flüssigkeit, indem sie verdampft, außerhalb des Reaktionsrohrs zum Boden der Anlage absinken kann, um im Innern des Reaktionsrohrs wieder aufzusteigen,
- das Gas, das den Kopf des Reaktionsrohrs erreicht, wird durch die Ankunft der kryogenen Flüssigkeit mittels Venturi-Effekt erneut zum Boden der Anlage mitgeführt, wodurch ermöglicht wird, dass das Gas mehrmals auf den Strom aus absteigenden Tropfen trifft, bevor es durch Regelung des Überdrucks im Innern der Anlage nach außen abgeleitet wird.

2. Verfahren nach Anspruch 1, **dadurch gekennzeichnet, dass**, stromabwärts des Reaktionsrohrs die Ablenkung des Stroms aus Partikeln, die am Ausgang des Reaktionsrohrs erhalten wurden, mithilfe eines Ablenkmittels zwischen dem Ausgang des Reaktionsrohrs und Mitteln zur Gewinnung, zur Ausleitung und zur Beförderung der hergestellten Partikel nach außen erfolgt, um diese Mittel zur Gewinnung mit Partikeln zu versorgen, die, im Vergleich mit einer Situation ohne Ablenkmittel, abgebremst wurden.

3. Anlage zur Herstellung von festen Partikeln aus einer flüssigen oder halbflüssigen Zusammensetzung, in der eine Vorrichtung zur Bildung und Abscheidung von Tropfen des Produkts, dann ein Schritt zum Einfrieren oder zur vollständigen oder teilweisen Kristallisation der so gebildeten Tropfen eingesetzt wird, umfassend:
- ein Reaktionsrohr, das im Innern der Anlage konzentrisch angeordnet ist, in dessen Kopfteil ein Strom aus Tropfen, der von der Vorrichtung zur Bildung produziert wird, eintritt und in dessen Inneren dieser Strom von oben nach unten zirkuliert;
- Mittel zur Versorgung mit kryogener Flüssigkeit, die es ermöglichen, einen Strom aus kaltem Gas zu erhalten, der im Gegenstrom vom Boden des Reaktionsrohrs zum Kopf des Reaktionsrohrs steigt,
**dadurch gekennzeichnet, dass** es die Mittel zur Versorgung mit kryogener Flüssigkeit ermöglichen, die folgende Konfiguration zu erhalten:
- Versorgen der Anlage mit kryogener Flüssigkeit im Kopfteil der Anlage, wodurch die kryogene Flüssigkeit, indem sie verdampft, außerhalb des Reaktionsrohrs zum Boden der Anlage absinken kann, um im Innern des Reaktionsrohrs wieder aufzusteigen,
- das Gas, das den Kopf des Reaktionsrohrs erreicht, wird durch die Ankunft der kryogenen Flüssigkeit mittels Venturi-Effekt erneut zum Boden der Anlage mitgeführt, wodurch ermöglicht wird, dass das Gas mehrmals auf den Strom aus absteigenden Tropfen trifft, bevor es durch Regelung des Überdrucks im Innern der Anlage nach außen abgeleitet wird.

4. Anlage nach Anspruch 3, **dadurch gekennzeichnet, dass** das Reaktionsrohr eine im Wesentlichen konische Form aufweist.

5. Anlage nach Anspruch 3 oder 4, **dadurch gekennzeichnet, dass** sie stromabwärts des Reaktionsrohrs ein Ablenkmittel, vorzugsweise mit konischer Form, umfasst, das befähigt ist, sich zwischen den Ausgang des Reaktionsrohr und Mitteln zur Gewinnung, zur Ausleitung und zur Beförderung der hergestellten Partikel nach außen, zu stellen, wodurch ermöglicht wird, diese Mittel zur Gewinnung mit Partikeln zu versorgen, die im Vergleich mit einer Situation ohne Ablenkmittel, abgebremst wurden.

6. Anlage nach einem der Ansprüche 3 bis 5, **dadurch gekennzeichnet, dass** die Mittel zur Versorgung mit kryogener Flüssigkeit die Injektion der kryogenen Flüssigkeit in den Kopfteil der Anlage über ringförmig um das Reaktionsrohr herum verteilte Öffnungen ausführen.

## Claims

1. Method for producing solid particles, implemented in a plant for producing solid particles, from a liquid or semi-liquid composition, implementing a device for forming and depositing drops of the product, then a step of total or partial deep-freezing or crystallisation of the drops thus formed, the following measures being implemented:
- by means of the forming device, a stream of drops of the composition is produced, entering the upper portion of a reaction tube, the reaction tube being situated concentrically inside the plant, and circulating within this reaction tube from top to bottom;
- the plant is supplied with cryogenic liquid for creating a cold gas stream rising in counter-current from the bottom of the reaction tube towards the top of the reaction tube,
**characterised in that** the following gas circulation is carried out:
- the upper portion of the plant is supplied with cryogenic liquid, allowing the cryogenic liquid to descend, vaporising as it does, towards the bottom of the plant outside the reaction tube in order to go back up inside the reaction tube,
- the gas reaching the top of the reaction tube is re-directed towards the bottom of the plant by the arrival of cryogenic liquid, by Venturi effect, thus allowing the gas to meet the descending stream of drops multiple times, before being evacuated towards the outside by control of the overpressure inside the plant.

2. Method according to claim 1, **characterised in that**, downstream of the reaction tube, by means of a deflection means, the stream of particles obtained at the outlet of the reaction tube is deflected between the outlet of the reaction tube and means for recovering, outputting and guiding towards the outside the particles produced, in order to supply these recovery means with particles which have been decelerated in relation to a situation in which there is no deflection means.

3. Plant for producing solid particles, from a liquid or semi-liquid composition, implementing a device for forming and depositing drops of the product, then a step of total or partial deep-freezing or crystallisation of the drops thus formed, comprising:
- a reaction tube, situated concentrically inside the plant, in the upper portion of which a stream of drops produced by said forming device enters and within which this stream circulates from top to bottom;
- means for supplying cryogenic liquid, allowing a cold gas stream rising in counter-current from the bottom of the reaction tube towards the top of the reaction tube to be obtained,
**characterised in that** the means for supplying cryogenic liquid allow the following configuration to be obtained:
- the upper portion of the plant is supplied with cryogenic liquid, allowing the cryogenic liquid to descend, vaporising as it does, towards the bottom of the plant outside the reaction tube in order to go back up inside the reaction tube,
- the gas reaching the top of the reaction tube is re-directed towards the bottom of the plant by the arrival of cryogenic liquid, by Venturi effect, thus allowing the gas to meet the descending stream of drops multiple times, before being evacuated towards the outside by control of the overpressure inside the plant.

4. Plant according to claim 3, **characterised in that** the reaction tube is substantially conical in shape.

5. Plant according to either claim 3 or claim 4, **characterised in that** it comprises, downstream of the reaction tube, a deflection means, preferably conical in shape, which can be inserted between the outlet of the reaction tube and means for recovering, outputting and guiding towards the outside the particles produced, allowing these recovery means to be supplied with particles which have been decelerated in relation to a situation in which there is no deflection means.

6. Plant according to any of claims 3 to 5, **characterised in that** the means for supplying cryogenic liquid inject cryogenic liquid into the upper portion of the plant, according to an annular distribution of openings around the reaction tube.
